# EUROPEAN PATENT SPECIFICATION

(11) **EP 2 722 596 B1**
(45) Date of publication and mention of the grant of the patent: **10.02.2016**
(21) Application number: 12189332.5
(22) Date of filing: 19.10.2012
(51) Int. Cl.: F24D 12/02, F24D 19/10, F24D 11/00

(54) **HEATING INSTALLATION AND METHOD RELATED THERETO**
Heizinstallation und zugehöriges Verfahren
Installation de chauffage et procédé s'y rapportant

(43) Date of publication of application: 23.04.2014
(73) Proprietor: Alfa Laval Corporate AB, 221 00 Lund (SE); Alfa Laval Hes, 69210 Lentilly (FR)
(72) Inventor: Perrin, Matthieu, 69008 LYON (FR); Joennson, Rolf, 372 37 RONNEBY (SE); Helin, PerOla, 372 36 RONNEBY (SE)
(74) Representative: Alfa Laval Attorneys

(56) References cited:
- DE-A1-102005 003 455
- JP-A- 60 248 945

## Description

### BACKGROUND

The present disclosure relates to the field of heating installations enabling to provide thermal power to a fluid. Such power may especially enable to heat a building or a building complex, but also to heat domestic water intended to be supplied to this or these buildings.

The present disclosure more specifically aims at a heating installation using several thermal power generation sources. Indeed, such an installation may comprise a main and a secondary thermal power generation source. The main source may in particular be an independent boiler, for example, a condensing boiler or a connection to a central heating network. Such a central heating network may thus supply several heating installations according to the present invention.

The secondary thermal power generation source is independent and advantageously is a source using renewable energy such as solar energy or the earth heat in the case of a heat pump.

### DISCUSSION OF PRIOR ART

Installations where the collective heating network is hydraulically arranged in parallel with a thermal installation especially comprising an independent heat generation source are well known. The document DE102005003455 discloses such an installation of that type and discloses a heating installation according to the preamble of claim 1, and a method of using such a heating installation. Such a heat generation source may have different forms and especially use renewable or waste energy, which is accordingly inexpensive or even free.

Independent heat generation sources using solar power, earth heat, heat pump or a waste fuel such as household refuse or plants are also known. Such a secondary thermal power generation source may also use liquid or gaseous fuel, like a conventional boiler or like a fuel cell.

When the power generated by the secondary thermal power generation source is sufficient to enable the fluid flowing through the thermal installation to reach its threshold temperature, the thermal exchange between a first fluid circulating in the collective network and a second fluid of the thermal installation is stopped.

Accordingly, if the secondary thermal power generation source uses solar power, hot domestic water and/or the heating may be produced during the sunny period. However, in certain cases, the temperature of the second fluid returning to the main source may very significantly increase, especially in the summer. Such an overheating of the second fluid may create the ideal conditions to have no condensation in condensing boilers, which results in excessively hot returns of the first fluid, thus increasing thermal losses in a cold return loop of the primary network.

Thus, a first object of the present invention is to ensure a condensation in boilers even during periods of high renewable power generation. The power efficiency of the heating installation is thereby improved.

A second object of the present invention is to enable not to waste power generated by the secondary thermal power generation source by maintaining the temperature of the primary fluid cold in the cold return loop of a central network. Thereby, its power efficiency is also improved.

This object is thus to control the subcooling of the primary fluid in the return loop of the central network and the heat exchanges between the independent heat generation source and the primary circuit. It may indeed also be a problem to have too hot primary returns to be sent back into the networks.

### SUMMARY

The present invention thus relates to a heating installation comprising:
- a main thermal power generation source comprising a first heat exchanger connected to two fluid circuits and wherein a first fluid of a primary circuit is capable of transmitting thermal power to a second fluid of a secondary circuit;
- at least one storage vessel allowing a temporary storage of the second fluid, the at least one storage vessel and the first heat exchanger being hydraulically arranged in parallel;
- at least one secondary heat generation source enabling to transmit thermal power to the second fluid stored in the at least one storage vessel;
- distribution means enabling to direct all or part of the flow of the second fluid into the at least one storage vessel and/or into the first heat exchanger.

According to the present invention, such a heating installation is characterized in that it comprises:
- a second heat exchanger hydraulically connected in series with the first heat exchanger, the second heat exchanger being arranged downstream of the first heat exchanger along the direction of circulation of the second fluid;
- a return pipe allowing the flow of the second fluid coming from the at least one storage vessel to pass through the said second heat exchanger.

In other words, such a heating installation enables to totally or partially direct the flow of the second fluid into the storage vessel, and/or into the first heat exchanger. Such distribution means are then driven by a control unit enabling to generate an operating reference especially depending on temperature parameters of the second fluid within the installation.

Further, the first fluid of the primary circuit then exchanges its thermal power with the second fluid in the second heat exchanger, and then in the first heat exchanger. Such heat exchangers may especially be separate or also be in one piece according to the bulk constraints in the premises intended to receive such an installation.

Further, and according to a first embodiment, the first and second heat exchangers may especially be in the form of plate heat exchangers when the main thermal power generation source comprises a connection to a collective heating network.

According to a second embodiment, the first heat exchanger may be a condenser of a condensing boiler and the second heat exchanger may be a burner of this same condensing boiler.

The second fluid flowing through the second heat exchanger may at least partially originate from the storage vessel.

According to a specific embodiment, such a heating installation may comprise means for bypassing the second heat exchanger enabling to selectively direct the flow of the second fluid into the second heat exchanger or into a second bypass duct.

Further, the bypass means of the second exchanger enable to totally direct the flow of the second fluid into the second bypass duct. Thus, when the second fluid only comes from the storage vessel and from the first bypass duct, it may be deviated into the second bypass duct and thus avoid passing through the second heat exchanger.

Advantageously, the distribution means may comprise a first three-way control valve.

In other words, this first three-way valve comprises an inlet connected to the inlet of the second fluid in the thermal installation, and two outlets respectively connected to the first heat exchanger and an inlet of the storage vessel. Such an inlet of the storage vessel is generally located at the level of the lower portion thereof.

In practice, the heating installation may comprise means for bypassing the storage vessel enabling to deviate a portion of the flow of the second fluid supplying the storage vessel.

Thereby, a portion of the second fluid supplying the storage vessel may be partially deviated. It is thus possible to limit the flow rate of the second fluid circulating within the storage vessel.

According to a specific embodiment, the bypass means may comprise a first bypass duct hydraulically arranged in parallel with respect to the storage vessel and a second three-way valve.

Such a second three-way valve is then capable of mixing a portion of the flow of the second fluid originating from the first bypass duct and another portion of the flow of the second fluid originating from the storage vessel. Such a three-way valve thus is a mixing control valve but it may also be envisaged to use a feed valve placed at the inlet of the storage vessel. In this case, the feed valve enables to distribute the flow of the second fluid to the storage vessel and/or to the first bypass duct.

In practice, the means for bypassing the second heat exchanger may comprise a third three-way valve.

This third three-way valve then is a feed valve which selectively directs the flow of the second fluid towards the second heat exchanger or the second bypass duct. The inlet of this third three-way valve is then connected to the outlet of the second three-way valve.

According to a specific embodiment, one at least of the first and second heat exchangers may comprise recycling means allowing the internal circulation of the second fluid.

In other words, the recycling means enable to establish a minimum flow rate of the second fluid and avoid for the second fluid contained in at least one of the first and second heat exchangers to remain motionless inside thereof. Such a case may especially arise when the first three-way valve totally directs the flow of the second fluid towards the storage vessel and/or the first bypass duct. Such recycling means may then be arranged internally or externally to the first and/or to the second heat exchanger.

Advantageously, the heating installation may comprise temperature sensors respectively measuring the temperature of second fluid T1 at the outlet of the installation, the temperature of second fluid T2 upstream of the distribution means and the temperature of second fluid T5 in a high portion of the storage vessel.

Such temperature sensors are then connected to the control unit and enable to transmit thereto the temperature of the second fluid at different points of the heating installation.

According to another aspect, the present invention also relates to a method enabling to direct all or part of the flow of the second fluid into the storage vessel and/or into the first heat exchanger of a heating installation such as previously described.

Thus, such a method comprises the steps of:
- measuring a first temperature T5 of the second fluid in a high portion of the storage vessel;
- measuring a second temperature T2 of the second fluid upstream of the distribution means;
- comparing the first temperature T5 with the second temperature T2;
- driving the distribution means enabling to direct all or part of the flow of the second fluid into the storage vessel and/or into the first heat exchanger according to the comparison between temperatures T5 and T2.

In other words, a unit for controlling the heating installation generates a reference value for the control of the distribution means according to temperatures T5 and T2 of the second fluid.

In practice, the method may comprise the steps of:
- generating a temperature reference Tc1 determining temperature T1 of the second fluid desired at the outlet of the installation;
- comparing measured temperature T5 with temperature reference Tc1;
- driving the distribution means enabling to direct all or part of the flow of the second fluid into the storage vessel and/or into the first heat exchanger according to the comparison between temperature T5 and temperature reference Tc1.

Thus, the comparison between measured temperature T5 of the second fluid and the generated temperature reference Tc1 also enables the control unit to generate the reference value for controlling the distribution means, and more specifically the first three-way valve capable of directing all or part of the second fluid into the storage vessel and/or into the first heat exchanger.

According to a specific embodiment, the means for bypassing the storage vessel and the means for bypassing the second heat exchanger may be driven according to the comparison between temperature T5 and temperature reference Tc1.

In other words, the comparison between the values of measured temperature T5 of the second fluid and temperature reference Tc1 also enables to generate the reference value of control of the means for bypassing the storage vessel and of the means for bypassing the second heat exchanger.

Thus, when a temperature T5 smaller than temperature T2 is measured, the first three-way valve may be driven to direct the entire flow of the second fluid into the first heat exchanger.

Thus, when the temperature of the second fluid located in a high portion of the storage vessel is smaller than temperature T2 of the second fluid at the inlet of the heating installation, the entire flow of the second fluid is directed into the first heat exchanger. Indeed, in this configuration, the secondary heat generation source does not enable to provide power to the second fluid. Accordingly, the storage vessel does not enable to be used as a storage for the second fluid at high temperature. Such a case may especially occur at night when the secondary heat generation source is especially formed of solar panels.

However, when a temperature T5 greater than temperature T2 and than temperature reference Tc1 is measured, the first three-way valve may be driven to direct the entire flow of the second fluid into the storage vessel and the first bypass duct.

In this case, temperature T5 of the second fluid contained in the high portion of the storage vessel is higher than both temperature T2 of the second fluid at the inlet of the installation and temperature reference Tc1 at the outlet of the heating installation. The control unit then generates a reference signal enabling to direct the entire flow of the second fluid into the storage vessel, and secondarily, into the first bypass duct, if present. The flow of the second fluid is then directed into the second bypass duct enabling to short the second heat exchanger. Thus, only the storage vessel is used to transit the thermal power originating from the secondary heat generation source to the second fluid.

In an another embodiment, and in the case there isn't any first bypass duct and any second three way valve in the installation, the channel of the first heat exchanger may be used as a bypass duct for the storage vessel. The control unit then generates a reference signal enabling to direct flow of the second fluid into the storage vessel and secondarily into the channel of the first heat exchanger. Thus, as explained before, only the storage vessel is used to transfer the thermal energy originating from the secondary heat generation source to the second fluid.

Finally, when a temperature T5 greater than temperature T2 but smaller than temperature reference Tc1 is measured, a first three-way valve can be driven to distribute the flow of the second fluid both to the first heat exchanger and to the storage vessel.

In this case, when temperature T5 of the second fluid in the storage vessel is greater than temperature T2 at the inlet of the installation but smaller than temperature reference Tc1 of the second fluid at the outlet of the installation, the control unit generates a reference signal enabling to distribute the flow of the second fluid both to the first heat exchanger and to the storage vessel. It is thus possible to heat the second fluid both with the first fluid of the collective heating network and with the fluid flowing through the secondary heat generation source.

Advantageously, the first three-way valve may be driven by means of regulation rules which depend on the type of main thermal power generation source.

Such regulation or opening rules then especially enable to avoid pumping phenomena in a boiler controller or in a two-way valve placed at the inlet or at the outlet of the first heat exchanger by regulating its opening according to the opening of the first three-way valve.

### BRIEF DESCRIPTION OF THE DRAWINGS

The implementation and other features and advantages of the present invention will be discussed in detail in the following non-limiting description of the following embodiment in connection with the accompanying drawings.
- Figures 1 to 3 schematically show three circulation modes of the second fluid inside of the heating installation,
- Figures 4 and 5 shows opening rules for the first three-way valve according to temperature T5 of the second fluid.

### DETAILED DESCRIPTION

As already discussed, the present invention relates to a heating installation with an improved power efficiency especially enabling to avoid hot return problems on central heating networks or the lack of condensation in condensing boilers.

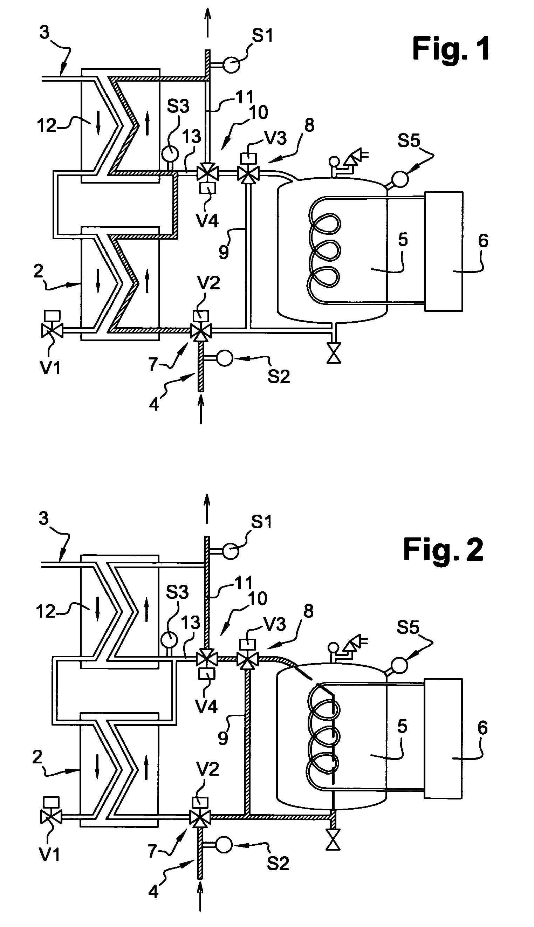

As shown in Figure 1, such a heating installation **1** thus comprises a first heat exchanger **2** enabling a first fluid of a primary circuit **3** to transmit its thermal power to a second fluid of a secondary circuit **4.** Such a primary circuit **3** originates from a collective heating network comprising a hot loop which enables to feed with a first fluid first heat exchanger **2** and a cold loop which enables to recover the first fluid at the outlet of heat exchanger **2.**

Such an installation **1** further comprises distribution means **7** enabling to direct the second fluid into first heat exchanger **2** or into a storage vessel **5** connected to a secondary heat generation source **6.** Such distribution means **7** may especially comprise a first three-way valve **V2.**

Further, secondary heat generation source **6** enables to transmit thermal power to the second fluid, when it is stored in storage vessel **5.** Temperature sensors **S1, S2,** and **S5** enable to measure the temperature of the second fluid at different points of the heating installation.

Thus, temperature sensor **S2** measures the temperature of the second fluid at the inlet of heating installation **1,** that is, upstream of first three-way valve **V2.** Temperature sensor **S5** measures the temperature of the second fluid in a high portion of storage vessel **5**. Finally, temperature sensor **S1** measures the temperature of the second fluid of at the outlet of the heating installation.

As shown in Figure 1, the circulation of the second fluid only occurs in first heat exchanger **2** and in a second heat exchanger **12** before returning to the secondary circuit. Such an operating mode is particularly advantageous when temperature T5 of the second fluid is lower than temperature T2. Indeed, in this case, the second fluid reaching the installation cannot sample draw power inside of storage vessel **5.** It is thus desirable to only use the thermal power provided by the collective heating network by crossing first and second heat exchangers **2** and **12.**

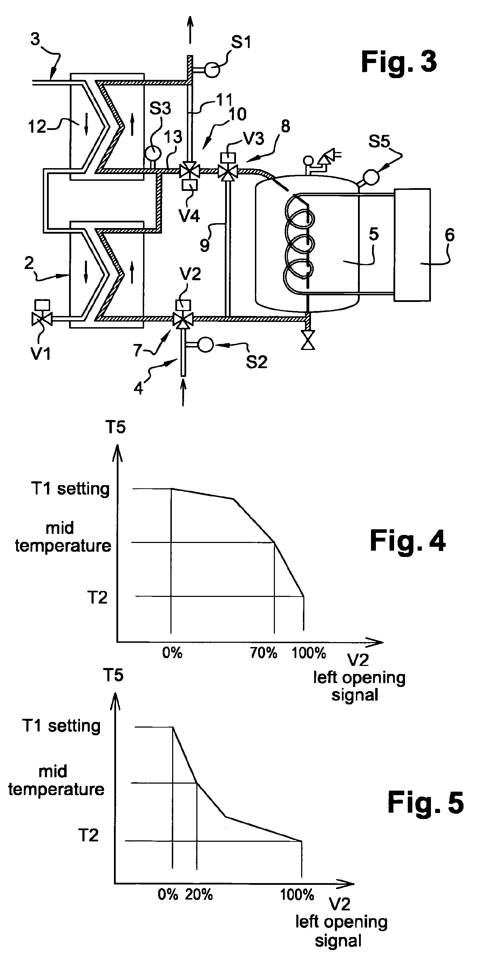

As shown in Figure 2 and in Figure 3, when temperature T5 of the second fluid is higher than temperature T2 at the inlet of the installation, the second fluid can then use the thermal power stored in the storage vessel. However, two cases should be envisaged according to the comparison between temperature T5 of the second fluid in the storage vessel and temperature reference Tc1 of the second fluid at the outlet of the installation.

In a first case, and as shown in Figure 2, when temperature T5 is higher than temperature reference Tc1 of the second fluid, distribution means **7** then direct the flow of the second fluid towards storage **vessel 5** only. Further, bypass means **8** comprise a first duct **9** hydraulically arranged in parallel with storage vessel **5.** A second three-way electrovalve **V3** enables to limit the flow rate of the second fluid inside of storage vessel **5.** Thus, a portion of the second fluid then penetrates into storage vessel **5** and captures the thermal power generated by secondary heat generation source **6.**

Further, bypass means **10** then enable the second fluid not to circulate through second heat exchanger **12.** Such bypass means **10** indeed comprise a second bypass duct **11** hydraulically arranged in parallel with second heat exchanger **12** and a three-way valve **V4** hydraulically placed downstream of second three-way valve **V3.**

As shown in Figure 3, when temperature T5 of the second fluid is lower than reference temperature Tc1 at the outlet of the heating installation, the means for controlling first three-way valve **V2** then drive a distribution of the flow of the second fluid into first heat exchanger **2** and into storage vessel **5.** It is however, in this case, not necessary to use first bypass duct **9** since the flow rate of the second fluid directed into the storage vessel can be regulated by means of first three-way valve **V2.** Second three-way valve **V3** then lets through all the second fluid originating from storage vessel **5,** and closes the portion originating from the first bypass duct. Similarly, third three-way electrovalve **V4** lets through the entire flow of the second fluid originating from storage vessel **5** towards second heat exchanger **12** via a return pipe **13.** Temperature sensor **S3** may measure the temperature of the second fluid at the inlet of a second heat exchanger **12.** The outlet of third three-way electrovalve **V4** which is connected to second bypass duct **11** is closed.

Thus, such an embodiment enables to keep on drawing thermal power inside of storage vessel **5** during the transient phase during which temperature T5 of the second fluid stored in storage vessel **5** remains higher than temperature T2 of the second fluid at the inlet of installation **1.**

As shown in Figures 4 and 5, in the case where temperature T5 of the second fluid contained in the storage vessel ranges between temperature reference Tc1 and temperature T2, the rules for opening first three-way valve **V2** may be a function of the type of main thermal power generation source.

Thus, as shown in Figure 5, when the main power source is formed by a condensing boiler, the distribution performed by the first three-way valve **V2** favors the circulation of the second fluid inside of the storage vessel. Indeed, when temperature T5 is equal to the average value of temperature reference Tc1 and temperature T2, the opening rate of three-way valve **V2** to the left, and thus towards the first heat exchanger, is smaller than 50% and may more specifically be equal to 30%.

Conversely, and as shown in Figure 5, when the main source is connected to a collective heating network and thus comprises a heat exchanger of multi-pass type, the distribution performed by first three-way valve **V2** favors the circulation of the second fluid within the first heat exchanger. Indeed, when temperature T5 of the second fluid is equal to the average value of temperature reference Tc1 and temperature T2, the opening rate of three-way valve **V2** to the left, and thus towards the first heat exchanger, is greater than 50% and may more specifically be equal to 70%.

Alternatively, at least one of the three-way valves **V2, V3** and **V4** may be substituted by a four-way valve. More precisely, the two three-way valves **V3** and **V4** or **V2** and **V3** may be replaced by a four-way valve.

The foregoing shows that an installation according to the present invention has many advantages, and especially:
- it enables to increase the condensation phenomenon inside of the first heat exchanger;
- it enables to guarantee an optimum power efficiency of such an installation;
- it enables to avoid the heating of the cold return loop of the collective heating network.

## Claims

1. A heating installation (1) comprising:
• a main thermal power generation source comprising a first heat exchanger (2) connected to two fluid circuits and wherein a first fluid of a primary circuit (3) is capable of transmitting thermal power to a second fluid of a secondary circuit (4);
• at least one storage vessel (5) allowing a temporary storage of the second fluid, the at least one storage vessel (5) and said first heat exchanger (2) being hydraulically arranged in parallel in the said secondary circuit (4);
• at least one secondary heat generation source (6) enabling to transmit thermal power to the second fluid stored in the at least one storage vessel (5);
• distribution means (7) enabling to direct all or part of the flow of the second fluid into the at least one storage vessel (5) and/or into said first heat exchanger (2);
said installation being **characterized in that** it comprises:
• a second heat exchanger (12) hydraulically connected in series with the first heat exchanger (2), said second heat exchanger (12) being arranged downstream of the first heat exchanger (2) along the direction of circulation of the second fluid;
• a return pipe (13) allowing the flow of the second fluid coming from the at least one storage vessel (5) to pass through said second heat exchanger (12).

2. The heating installation of claim 1, **characterized in that** it comprises means (10) for bypassing the second heat exchanger (12) enabling to selectively direct the flow of the second fluid into the second heat exchanger (12) or into a second bypass duct (11).

3. The heating installation of claim 1, **characterized in that** the distribution means (7) comprise a first three-way valve (V2).

4. The heating installation of claim 1, **characterized in that** it comprises means (8) for bypassing the at least one storage vessel (5) enabling to deviate a portion of the flow of the second fluid supplying the storage vessel (5).

5. The heating installation of claim 4, **characterized in that** the bypass means (8) comprise a first bypass duct (9) hydraulically arranged in parallel with respect to said at least one storage vessel (5) and a second three-way valve (V3).

6. The heating installation of claim 2, **characterized in that** said means (10) for bypassing the second heat exchanger (12) comprise a third three-way valve (V4).

7. The heating installation of claim 1, **characterized in that** one at least of said first and second heat exchangers (2, 12) comprises recycling means allowing the internal circulation of the second fluid.

8. The heating installation of claim 1, **characterized in that** it comprises temperature sensors (S1, S2, S5) for respectively measuring the temperature (T1) of second fluid at the outlet of the installation, the temperature (T2) of second fluid upstream of the distribution means (7), and the temperature (T5) of second fluid in a high portion of the at least one storage vessel (5).

9. A method enabling to direct all or part of the flow of the second fluid into the storage vessel (5) and/or into the first heat exchanger (2) of the heating installation (1) of any of the foregoing claims, said method comprising the steps of:
• measuring a first temperature (T5) of the second fluid in a high portion of the storage vessel (5);
• measuring a second temperature (T2) of the second fluid upstream of the distribution means (7);
• comparing the first temperature (T5) with the second temperature (T2);
• driving the distribution means (7) enabling to direct all or part of the flow of the second fluid into the at least one storage vessel (5) and/or into the first heat exchanger (2) according to the comparison between said first and second temperatures (T5, T2).

10. The method of claim 9, **characterized in that** it comprises the steps of:
• generating a temperature reference (Tc1) determining the temperature (T1) of the second fluid desired at the outlet of the installation (1);
• comparing the measured first temperature (T5) with the temperature reference (Tc1);
• driving the distribution means (7) enabling to direct all or part of the flow of the second fluid into the at least one storage vessel (5) and/or into the first heat exchanger (2) according to the comparison between the first temperature (T5) and the temperature reference (Tc1).

11. The method of claim 10 applied to a heating installation according to claims 2 and 4, **characterized in that** the means (8) for bypassing the at least one storage vessel (5) and the means (10) for bypassing the second heat exchanger (12) are driven according to the comparison between the first temperature (T5) and the temperature reference (Tc1).

12. The method of claim 10 applied to a heating installation according to claim 3, **characterized in that**, when a first temperature (T5) lower than the second temperature (T2) is measured, the first three-way valve (V2) may be driven to direct the entire flow of the second fluid into the first heat exchanger (2).

13. The method of claim 11 applied to a heating installation according to claim 3, **characterized in that**, when a first temperature (T5) greater than the second temperature (T2) and than the temperature reference (Tc1) is measured, the first three-way valve (V2) is driven to direct the entire flow of the second fluid into the at least one storage vessel (5) and the first bypass duct (9).

14. The method of claim 11 applied to a heating installation according to claim 3, **characterized in that**, when a first temperature (T5) higher than the second temperature (T2) but lower than the temperature reference (Tc1) is measured, the first three-way valve (V2) is driven to distribute the flow of the second fluid both to the first heat exchanger (2) and to the at least one storage vessel (5).

## Patentansprüche

1. Heizungsinstallation (1), die Folgendes umfasst:
• eine Haupt-Wärmeleistungserzeugungsquelle, die einen ersten Wärmetauscher (2) umfasst, der mit zwei Fluidkreisen verbunden ist, und wobei ein erstes Fluid eines primären Kreises (3) dazu in der Lage ist, Wärmeleistung zu einem zweiten Fluid eines sekundären Kreises (4) zu übertragen,
• wenigstens einen Speicherbehälter (5), der eine zeitweilige Speicherung des zweiten Fluids ermöglicht, wobei der wenigstens eine Speicherbehälter (5) und der erste Wärmetauscher (2) hydraulisch parallel in dem sekundären Kreis (4) angeordnet sind,
• wenigstens eine sekundäre Wärmeleistungserzeugungsquelle (6), die es ermöglicht, Wärmeleistung zu dem in dem wenigstens einen Speicherbehälter (5) gespeicherten zweiten Fluid zu übertragen,
• Verteilungsmittel (7), die es ermöglichen, die Gesamtheit oder einen Teil des Flusses des zweiten Fluids in den wenigstens einen Speicherbehälter (5) und/oder in den ersten Wärmetauscher (2) zu leiten,
wobei die Installation **dadurch gekennzeichnet ist, dass** sie Folgendes umfasst:
• einen zweiten Wärmetauscher (12), der hydraulisch in Reihe mit dem ersten Wärmetauscher (2) verbunden ist, wobei der zweite Wärmetauscher (12) entlang der Umlaufrichtung des zweiten Fluids stromabwärts von dem ersten Wärmetauscher (2) angeordnet ist,
• ein Rücklaufrohr (13), das es ermöglicht, dass der Fluss des aus dem wenigstens einen Speicherbehälter (5) kommenden zweiten Fluids durch den zweiten Wärmetauscher (12) hindurchgeht.

2. Heizungsinstallation nach Anspruch 1, **dadurch gekennzeichnet, dass** sie Mittel (10) zum Umgehen des zweiten Wärmetauschers (12) umfasst, die es ermöglichen, selektiv den Fluss des zweiten Fluids in den zweiten Wärmetauscher (12) oder in eine zweite Umgehungsleitung (11) zu leiten.

3. Heizungsinstallation nach Anspruch 1, **dadurch gekennzeichnet, dass** die Verteilungsmittel (7) ein erstes Dreiwegeventil (V2) umfassen.

4. Heizungsinstallation nach Anspruch 1, **dadurch gekennzeichnet, dass** sie Mittel (8) zum Umgehen des wenigstens einen Speicherbehälters (5) umfasst, die es ermöglichen, einen Teil des Flusses des zweiten Fluids, der den Speicherbehälter (5) versorgt, umzuleiten.

5. Heizungsinstallation nach Anspruch 4, **dadurch gekennzeichnet, dass** die Umgehungsmittel (8) eine erste Umgehungsleitung (9), die hydraulisch parallel in Bezug auf den wenigstens einen Speicherbehälter (5) angeordnet ist, und ein zweites Dreiwegeventil (V3) umfassen.

6. Heizungsinstallation nach Anspruch 2, **dadurch gekennzeichnet, dass** die Mittel (10) zum Umgehen des zweiten Wärmetauschers (12) ein drittes Dreiwegeventil (V4) umfassen.

7. Heizungsinstallation nach Anspruch 1, **dadurch gekennzeichnet, dass** wenigstens einer von dem ersten und dem zweiten Wärmetauscher (2, 12) Rückführungsmittel umfasst, die den internen Umlauf des zweiten Fluids ermöglichen.

8. Heizungsinstallation nach Anspruch 1, **dadurch gekennzeichnet, dass** sie Temperatursensoren (S1, S2, S5) umfasst, die jeweils die Temperatur (T1) des zweiten Fluids am Auslass der Installation, die Temperatur (T2) des zweiten Fluids stromaufwärts von den Verteilungsmitteln (7) beziehungsweise die Temperatur (T5) des zweiten Fluids in einem hohen Abschnitt des wenigstens einen Speicherbehälters (5) messen.

9. Verfahren, das es ermöglicht, die Gesamtheit oder einen Teil des Flusses des zweiten Fluids in den Speicherbehälter (5) und/oder in den ersten Wärmetauscher (2) der Heizungsinstallation (1) nach einem der vorhergehenden Ansprüche zu leiten, wobei das Verfahren die folgenden Schritte umfasst:
• das Messen einer ersten Temperatur (T5) des zweiten Fluids in einem hohen Abschnitt des Speicherbehälters (5),
• das Messen einer zweiten Temperatur (T2) des zweiten Fluids stromaufwärts von den Verteilungsmitteln (7),
• das Vergleichen der ersten Temperatur (T5) mit der zweiten Temperatur (T2),
• das Ansteuern der Verteilungsmittel (7), die es ermöglichen, die Gesamtheit oder einen Teil des Flusses des zweiten Fluids in den wenigstens einen Speicherbehälter (5) und/oder in den ersten Wärmetauscher (2) zu leiten, entsprechend dem Vergleich zwischen der ersten und der zweiten Temperatur (T5, T2).

10. Verfahren nach Anspruch 9, **dadurch gekennzeichnet, dass** es die folgenden Schritte umfasst:
• das Erzeugen einer Temperaturreferenz (Tc1), welche die gewünschte Temperatur (T1) des zweiten Fluids am Auslass der Installation (1) bestimmt,
• das Vergleichen der gemessenen ersten Temperatur (T5) mit der Temperaturreferenz (Tc1),
• das Ansteuern der Verteilungsmittel (7), die es ermöglichen, die Gesamtheit oder einen Teil des Flusses des zweiten Fluids in den wenigstens einen Speicherbehälter (5) und/oder in den ersten Wärmetauscher (2) zu leiten, entsprechend dem Vergleich zwischen der ersten Temperatur (T5) und der Temperaturreferenz (Tc1).

11. Verfahren nach Anspruch 10, angewendet auf eine Heizungsinstallation nach Anspruch 2 und 4, **dadurch gekennzeichnet, dass** die Mittel (8) zum Umgehen des wenigstens einen Speicherbehälters (5) und die Mittel (10) zum Umgehen des zweiten Wärmetauschers (12) entsprechend dem Vergleich zwischen der ersten Temperatur (T5) und der Temperaturreferenz (Tc1) angesteuert werden.

12. Verfahren nach Anspruch 10, angewendet auf eine Heizungsinstallation nach Anspruch 3, **dadurch gekennzeichnet, dass**, wenn eine erste Temperatur (T5) gemessen wird, die niedriger ist als die zweite Temperatur (T2), das erste Dreiwegeventil (V2) angesteuert werden kann, um den gesamten Fluss des zweiten Fluids in den ersten Wärmetauscher (2) zu leiten.

13. Verfahren nach Anspruch 11, angewendet auf eine Heizungsinstallation nach Anspruch 3, **dadurch gekennzeichnet, dass**, wenn eine erste Temperatur (T5) gemessen wird, die höher ist als die zweite Temperatur (T2) und als die Temperaturreferenz (Tc1), das erste Dreiwegeventil (V2) angesteuert wird, um den gesamten Fluss des zweiten Fluids in den wenigstens einen Speicherbehälter (5) und die erste Umgehungsleitung (9) zu leiten.

14. Verfahren nach Anspruch 11, angewendet auf eine Heizungsinstallation nach Anspruch 3, **dadurch gekennzeichnet, dass**, wenn eine erste Temperatur (T5) gemessen wird, die höher ist als die zweite Temperatur (T2), aber niedriger als die Temperaturreferenz (Tc1), das erste Dreiwegeventil (V2) angesteuert wird, um den Fluss des zweiten Fluids sowohl zu dem ersten Wärmetauscher (2) als auch zu dem wenigstens einen Speicherbehälter (5) zu verteilen.

## Revendications

1. Installation de chauffage (1) comprenant :
• une source principale de génération d'énergie thermique comprenant un premier échangeur de chaleur (2) relié à deux circuits de fluide et dans laquelle un premier fluide d'un circuit primaire (3) est apte à transmettre de l'énergie thermique à un second fluide d'un circuit secondaire (4) ;
• au moins une cuve (5) permettant un stockage temporaire du second fluide, l'au moins une cuve (5) et ledit premier échangeur de chaleur (2) étant agencés hydrauliquement en parallèle dans ledit circuit secondaire (4) ;
• au moins une source secondaire de génération de chaleur (6) permettant de transmettre de l'énergie thermique au second fluide stocké dans l'au moins une cuve (5) ;
• un moyen de distribution (7) permettant de diriger tout ou partie de l'écoulement du second fluide dans l'au moins une cuve (5) et/ou dans ledit premier échangeur de chaleur (2) ;
ladite installation étant **caractérisée en ce qu'**elle comprend :
• un second échangeur de chaleur (12) hydrauliquement relié en série au premier échangeur de chaleur (2), ledit second échangeur de chaleur (12) étant agencé en aval du premier échangeur de chaleur (2) dans le sens de la circulation du second fluide ;
• un tuyau de retour (13) permettant à l'écoulement du second fluide provenant de l'au moins une cuve (5) de traverser ledit second échangeur de chaleur (12).

2. Installation de chauffage selon la revendication 1, **caractérisée en ce qu'**elle comprend un moyen (10) visant à contourner le second échangeur de chaleur (12) et permettant de diriger de manière sélective l'écoulement du second fluide dans le second échangeur de chaleur (12) ou dans une seconde conduite de contournement (11).

3. Installation de chauffage selon la revendication 1, **caractérisée en ce que** le moyen de distribution (7) comprend un premier robinet à trois voies (V2).

4. Installation de chauffage selon la revendication 1, **caractérisée en ce qu'**elle comprend un moyen (8) de contournement de l'au moins une cuve (5) permettant de dévier une partie de l'écoulement du second fluide alimentant la cuve (5).

5. Installation de chauffage selon la revendication 4, **caractérisée en ce que** le moyen de contournement (8) comprend une première conduite de contournement (9) agencée hydrauliquement en parallèle par rapport à ladite au moins une cuve (5) et un second robinet à trois voies (V3).

6. Installation de chauffage selon la revendication 2, **caractérisée en ce que** ledit moyen (10) de contournement du second échangeur de chaleur (12) comprend un troisième robinet à trois voies (V4).

7. Installation de chauffage selon la revendication 1, **caractérisée en ce que** l'un au moins desdits premier et second échangeurs de chaleur (2, 12) comprend un moyen de recyclage permettant la circulation interne du second fluide.

8. Installation de chauffage selon la revendication 1, **caractérisée en ce qu'**elle comprend des capteurs de température (S1, S2, S5) permettant respectivement de mesurer la température (T1) du second fluide à la sortie de l'installation, la température (T2) du second fluide en amont du moyen de distribution (7) et la température (T5) du second fluide dans une partie haute de l'au moins une cuve (5).

9. Procédé permettant de diriger tout ou partie de l'écoulement du second fluide dans la cuve (5) et/ou dans le premier échangeur de chaleur (2) de l'installation de chauffage (1) selon l'une quelconque des revendications précédentes, ledit procédé comprenant les étapes consistant à :
• mesurer une première température (T5) du second fluide dans une partie haute de la cuve (5) ;
• mesurer une seconde température (T2) du second fluide en amont du moyen de distribution (7) ;
• comparer la première température (T5) et la seconde température (T2) ;
• piloter le moyen de distribution (7) permettant de diriger tout ou partie de l'écoulement du second fluide dans l'au moins une cuve (5) et/ou dans le premier échangeur de chaleur (2) conformément à la comparaison entre lesdites première et seconde températures (T5, T2).

10. Procédé selon la revendication 9, **caractérisé en ce qu'**il comprend les étapes consistant à :
• générer un référentiel de température (Tc1) déterminant la température (T1) du second fluide souhaitée à la sortie de l'installation (1) ;
• comparer la première température (T5) mesurée et le référentiel de température (Tc1) ;
• piloter le moyen de distribution (7) permettant de diriger tout ou partie de l'écoulement du second fluide dans l'au moins une cuve (5) et/ou dans le premier échangeur de chaleur (2) conformément à la comparaison entre la première température (T5) et le référentiel de température (Tc1).

11. Procédé selon la revendication 10 appliqué à une installation de chauffage selon les revendications 2 et 4, **caractérisé en ce que** le moyen (8) de contournement de l'au moins une cuve (5) et le moyen (10) de contournement du second échangeur de chaleur (12) sont pilotés conformément à la comparaison entre la première température (T5) et le référentiel de température (Tc1).

12. Procédé selon la revendication 10 appliqué à une installation de chauffage selon la revendication 3, **caractérisé en ce que**, lorsqu'une première température (T5) inférieure à la seconde température (T2) est mesurée, le premier robinet à trois voies (V2) peut être piloté pour diriger la totalité de l'écoulement du second fluide dans le premier échangeur de chaleur (2).

13. Procédé selon la revendication 11 appliqué à une installation de chauffage selon la revendication 3, **caractérisé en ce que**, lorsqu'une première température (T5) supérieure à la seconde température (T2) et au référentiel de température (Tc1) est mesurée, le premier robinet à trois voies (V2) est piloté pour diriger la totalité de l'écoulement du second fluide dans l'au moins une cuve (5) et la première conduite de contournement (9).

14. Procédé selon la revendication 11 appliqué à une installation de chauffage selon la revendication 3, **caractérisé en ce que**, lorsqu'une première température (T5) supérieure à la seconde température (T2) mais inférieure au référentiel de température (Tc1) est mesurée, le premier robinet à trois voies (V2) est piloté pour distribuer l'écoulement du second fluide dans le premier échangeur de chaleur (2) ainsi que dans l'au moins une cuve (5).
